# EUROPÄISCHE PATENTSCHRIFT

(11) **EP 1 036 264 B1**
(45) Veröffentlichungstag und Bekanntmachung des Hinweises auf die Patenterteilung: **12.03.2003**
(21) Anmeldenummer: 99941639.9
(22) Anmeldetag: 18.08.1999
(51) Int. Cl.: F02B 27/02

(54) **SAUGROHR MIT SCHALTWALZE**
INTAKE PIPE WITH SHIFT DRUM
TUBULURE D'ADMISSION A CYLINDRE D'OUVERTURE ET FERMETURE

(30) Priorität: 20.08.1998 EP 98115681
(43) Veröffentlichungstag der Anmeldung: 20.09.2000
(73) Patentinhaber: Filter-Werk Mann + Hummel GmbH, 71631 Ludwigsburg (DE)
(72) Erfinder: ESCH, Hans-Joachim, D-71296 Heimsheim (DE); LEIPELT, Rudolf, D-71672 Marbach (DE); PAFFRATH, Holger, D-71636 Ludwigsburg (DE)
(74) Vertreter: Voth, Gerhard, Dipl.-Ing.
(86) Internationale Anmeldenummer: EP9906038
(87) Internationale Veröffentlichungsnummer: WO00011333

(56) Entgegenhaltungen:
- EP-A- 0 848 145
- DE-A- 3 807 193
- DE-A- 3 829 522
- DE-A- 4 437 663
- DE-A- 19 741 805
- DE-A- 19 756 332

## Beschreibung

### Stand der Technik

Die Erfindung betrifft ein Saugrohr, insbesondere für die Ansaugluft einer Brennkraftmaschine welches eine Schaltwalze zur Veränderung der Saugkanallänge aufweist, nach der Gattung des Patentanspruches 1. Das Dokument DE 19741805 A1 weist ein Saugrohr mit den Merkmalen des Obergriffs des Anspruches 1 auf.

Saugrohre mit Schaltwalzen sind bekannt, z. B. aus der Deutschen Patentanmeldung mit dem Aktenzeichen 198 53 741.7. Das in dieser Anmeldung vorgestellte Bauprinzip für Saugrohre sieht eine Schaltwalze vor, die gleichzeitig als Sammelraum für das Saugrohr dient. Von diesem gehen Durchgänge ab, die in die Saugkanäle des Saugrohres hineinführen. Durch Drehen der Schaltwalze ist entweder eine stufenlose Verstellung möglich, wobei sich die Saugkanäle schneckenförmig um die Schaltwalze winden, oder es werden mehrere Saugkanäle pro Zylinder vorgesehen wobei diese durch Drehung der Schaltwalze zu- oder abgeschaltet werden können.

Durch die Unterbringung des Sammelraums in der Schaltwalze und den geforderten Mindestkrümmungsradius der Saugkanäle, ist die Schaltwalze in ihren Abmessungen verhältnismäßig groß. Die Schaltwalze dreht sich im Saugrohrgehäuse wobei sie an der Bildung von den Saugkanälen beteiligt ist, die vollständig gegeneinander und zum Sammelraum hin abgedichtet werden müssen. Durch den großen Durchmesser der Schaltwalze ergeben sich hierbei relativ große Dichtflächen. Um diese gegeneinander abzudichten, sind verhältnismäßig teure Dichtungen erforderlich. Gleichzeitig steigen die Toleranzanforderungen an die Bauteile, da ein vollständiges Anliegen der Dichtungen an den entsprechenden Dichtflächen notwendig ist. Da die Schaltwalze radial zwischen den einzelnen Saugkanälen gedichtet werden muß, ergeben sich auch bei der Montage Schwierigkeiten, denn die Dichtungen müssen über lange Montagebewegungen hinweg gehandhabt werden.

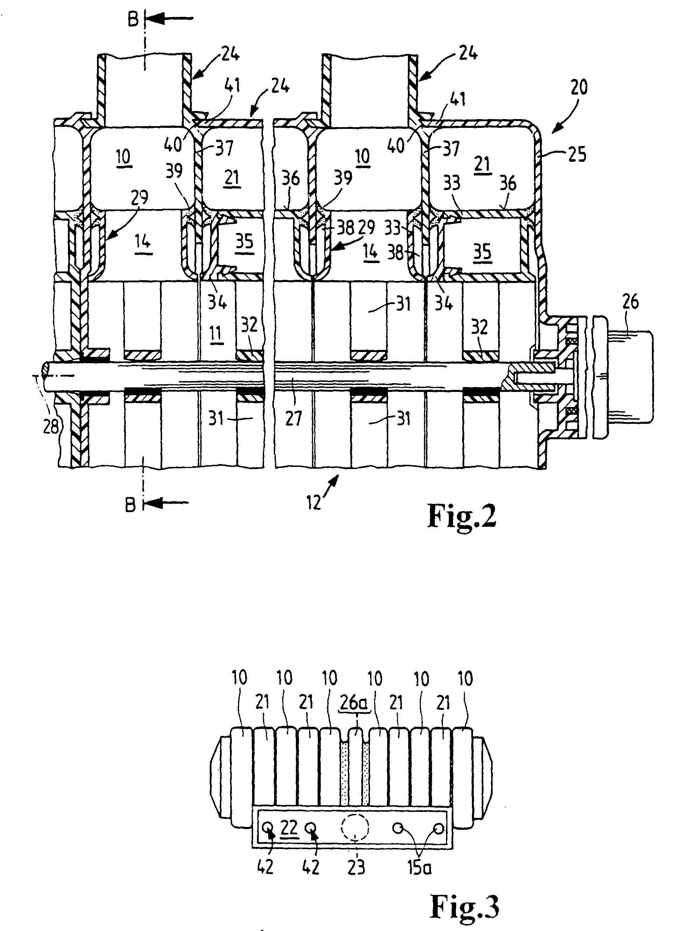

Um dem beschriebenen Problem abzuhelfen, wird gemäß der DE 197 56 332 A1 ein Saugrohraufbau vorgeschlagen, bei dem sowohl die Schaltwalze, wie auch die die Saugkanäle bildenden Einlegeteile des Saugrohres in scheibenförmige Module unterteilt sind. Eine Abdichtung der Saugkanäle erfolgt zwischen den jeweiligen Modulen, die zur Montage des Saugrohres nacheinander (gem. Figur 2 des genannten Dokumentes abwechselnd ein Kunststoffeinlegeteil 15, 16 und eine Stellscheibe 19) in das Saugrohrgehäuse eingeschoben werden.

Diese Bauform vermindert das Dichtungs- und Toleranzproblem. L-förmige Dichtringe 17 können z. B. vor der Montage fest mit den Stellscheiben 19 verbunden werden. Durch die Einlegeteile 15, 16 fällt jedoch ein zusätzlicher Bauaufwand an, der sich in erhöhten Fertigungskosten und vor allen Dingen einem erhöhten Bauteilgewicht niederschlägt. Verbrennungskraftmaschinen werden jedoch bevorzugt in mobilem Einsatz verwendet, weswegen der Gewichtsaspekt eine große Rolle spielt.

Aufgabe der Erfindung ist es daher, ein Saugrohr zu schaffen, welches einfach in der Montage und zuverlässig im Betrieb ist, wobei dessen Bauteilgewicht möglichst klein sein soll. Diese Aufgabe wird durch Merkmale des Patentanspruches 1 gelöst.

### Vorteile der Erfindung

Das erfindungsgemäße Saugrohr weist in bekannter Weise ein Gehäuse mit einem Einlaß und mehreren Auslässen auf. Der Einlaß kann mit dem Ansaugtrakt, der den Luftfilter beinhaltet, verbunden werden. Die Auslässe befinden sich an den Enden der Saugkanäle und können z. B. in einen Zylinderkopfftansch einer Brennkraftmaschine münden. In dem Saugrohr ist eine verstellbare Schaltwalze untergebracht, die zu diesem Zweck einen Antrieb aufweist. Im Inneren der Schaltwalze befindet sich der Sammelraum des Saugrohres, welcher Durchgänge aufweist, die mit den einzelnen Saugkanälen in Verbindung stehen. Die Saugkanäle winden sich schneckenförmig um die Schaltwalze, so daß eine Verstellung (insbesondere Drehung) der Schaltwalze zu einer Winkelverschiebung der Durchgänge und somit zu einer Verstellung der Saugrohrlänge führt.

Die Außenwand der Schaltwalze stellt damit gleichzeitig den Innenradius der Saugkanäle dar. Die anderen Wandungen der Saugkanäte werden teilweise oder vollständig durch Wandungselemente gebildet, die scheibenförmig aufgebaut sind, so daß deren Trennfugen senkrecht zur Drehachse der Schaltwalze angeordnet sind.

Der wesentliche Vorteil der erfindungsgemäßen Konstruktion liegt in der gleichzeitigen Verwendung der Wandungselemente zur Bildung der Gehäuseaußenwand des Saugrohrs. Im Vergleich zu der Konstruktion gemäß der DE 197 56 332 A1 kann somit der gesamte Gehäusekörper im Bereich der Schaltwalze entfallen. Die Wandungselemente müssen so ausgeführt sein, daß sie gleichzeitig eine Abdichtung der Trennfugen in der Weise ermöglichen, daß das Saugrohrinnere vollständig von der Umgebung abgedichtet ist. Die Wandungselemente können mit weiteren Gehäuseteilen kombiniert werden wobei der Wegfall des zusätzlichen Gehäuses zu einem Gewichtseinsparungseffekt führt.

Gemäß einer sinnvollen Ausgestaltung des Erfindungsgedankens kann auch die Schaltwalze in scheibenförmige Elemente geteilt werden. Diese Stellscheiben werden bei der Montage des Saugrohres zusammen mit dem Antrieb zu einer verstellbaren Einheit verbunden. Der modulare Aufbau der Schaltwalze ermöglicht insbesondere die Verwendung der Modulteile für unterschiedliche Zylinderzahlen, also auch Saugkanalzahlen des Saugrohrs. Außerdem kann auf diese Weise der Montageprozeß dahingehend vereinfacht werden, daß abwechselnd Wandungselemente und Stellscheiben montiert werden, so daß zwischen diesen Teilen bezüglich der Montagerichtung auch Hinterschneidungen möglich sind. Besonders vorteilhaft ist es dabei, die Schaltwalze in ihrer Drehachse auf einer Welle zu lagern. Die Stellscheiben können dann auf die Welle geschoben werden und sind auf diese Weise gleich zentriert. Die Stellscheiben werden gegeneinander sowie über Dichtflächen gegenüber den Steilscheiben positioniert. Um Toleranzen besser ausgleichen zu können, können die Naben an den Stellscheiben ballig ausgeführt sein, so daß diese auf der Welle taumeln können. Die Taumelbewegung wird dann durch die Toleranzen bestimmt, ca die Stellscheiben am Außenumfang gegenüber den Wandungselementen durch die Dichtfläche geführt werden

Zur Bildung dieser Dichtflächen weisen die Wandungselemente gemäß einer besonderen Ausgestaltung der Erfindung eine Ringrippe auf, die von dem das Gehäuse bildenden Wandungsabschnitt der Wandungselemente radial in das Saugrohrinnere hineinreichen und damit, als Einzelteil betrachtet, den Boden des gelochten Topfes bilden. Sie schließen damit den jeweils gebildeten Saugkanal auf einer Seite ab. Auf der anderen Seite wird der Abschluß durch die Ringrippe des benachbarten Wandungselementes gebildet. Die einzelnen Wandungselemente erhalten auf diese Weise die Form eines Topfes, wobei die Stellscheibe in die offene Seite hineingeschoben werden kann. Eine besonders kompakte Bauform ergibt sich dabei, wenn die beschriebenen Wandungselemente direkt hintereinander geschaltet werden. Die Ringrippen werden somit zur Trennung jeweils benachbarter Saugkanäte genutzt. Eine andere Möglichkeit besteht in einer abwechselnden Montage zweier unterschiedlicher Wandungselemente, wobei eines zur Bildung des jeweiligen Saugkanals und das andere zur Überbrückung eines axialen Abstandes zwischen den Saugkanälen vorgesehen wird.

Durch die abwechselnde Montage von Schaltscheiben und Wandungselementen können diese bezüglich der Montagerichtung Hinterschneidungen aufweisen. Diese können vorteilhaft dazu genutzt werden, daß die Ringrippen der Wandungselemente in einen Ringspalt hineinragen, der jeweils zwischen zwei benachbarten Stellscheiben entsteht. Dadurch ergibt sich die Möglichkeit jeweils zwischen der Innenkante der Ringrippen und den Stellscheiben Dichtlippen vorzusehen, die bevorzugt axial wirken. Über die Elastizität der Dichtung sowie das Taumelvermögen der Stellscheiben können Toleranzen hervorragend ausgeglichen werden. Durch den Aufbau des Saugrohrs ergeben jeweils zwei benachbarte Wandungselemente und die dazwischen liegende Stellscheibe eine Einheit mit definierter Geometrie, wobei Toleranzen nur innerhalb dieser Einheit auftreten. Dadurch werden Kettentoleranzen vermieden, die sich ergeben, wenn die Steltscheiben mit entsprechenden Dichtungsvorrichtungen in ein einteiliges Saugrohrgehäuse eingeschoben werden.

Gemäß einer günstigen Ausführungsform der Erfindung wird das Gehäuse aus Gleichteilen aufgebaut. Dabei bietet es sich insbesondere an, die Wandungselemente identisch zu gestalten. An den Stirnseiten des Saugrohres sind dann zwei Endteile notwendigt wobei es vorteilhaft ist, wenn eines der Endteile den Einlaß des Saugrohres trägt, und das andere den Antrieb für die Schaltwalze, deren Drehachse das Endteil im Zentrum durchdringt. Die beiden Endteile können entweder unterschiedlich ausgeführt sein oder einen identischen Grundkörper aufweisen, wobei für den Antrieb und den Ansaugtrakt der Brennkraftmaschine entsprechende Adapter konzipiert werden.

Diese Konstruktion ist dazu geeignet, ein Baukastensystem für Saugrohre aufzubauen. Dabei vermindert sich einerseits die Anzahl der benötigten Einzelteile, welche bevorzugt durch Urform-Verfahren hergestellt werden, so daß weniger Formwerkzeuge notwendig sind. Außerdem können die Einzelteile für unterschiedliche Saugrohre genutzt werden. Insbesondere lassen sich durch den modularen Aufbau Saugrohre für unterschiedliche Zylinderzahlen aus den Wandungselementen herstellen. Eine zweckmäßige Ausbildung des Erfindungsgedankens sieht vor, Rohrabzweigungen an den Wandungselementen vorzusehen, die vollständig durch das jeweilige Wandungsetement gebildet sind. Dadurch entsteht kein zusätzlicher Dichtungsaufwand für die Abdichtung der Rohrabzweigung gegenüber anderen Wandungselementen. Die Rohrabzweigungen sind notwendig, um den Saugkanal aus der schnekkenform um die Schaltwalze heraus zu dem zylinderseitigen Auslaß zu führen. Dies kann entweder direkt durch die Rohrabzweigung geschehen, oder durch Schwingrohrendstücke, die z. B. mit elastischen Rohrmuffen am Saugrohrgehäuse befestigt sein können.

Die Verwendung von Schwingrohrendstücken fördert vorteilhaft die Bildung eines Baukastensystems. Der Grundkörper des Saugrohrs kann aus den wenigen beschriebenen Gleichteilen aufgebaut werden, wobei die Saugrohrendstücke für den speziellen Anwendungsfall gestaltet werden müssen und so eine Anpassung des Saugrohrgrundkörpers an die Geometrie der entsprechenden Brennkraftmaschine ermöglichen.

Für die Verbindung der Wandungselemente untereinander ist es vorteilhaft, an jeweils benachbarten Wandungselementen eine Ringnut im Wandungselement und einen Montageabsatz im anderen vorzusehen. Zur Montage kann der Montageabsatz dann in die Ringnut hineingesteckt werden wodurch das abgedichtete Gehäuse entsteht. Die Abdichtung kann dabei curch eine zusatzliche Dichtung erfolgen, die in die Ringnut eingelegt wird, es ist aber auch möglich, daß die Dichtung durch die Steckverbindung selbst zustandekommt. Dies ist insbesondere machbar, wenn die Wandungselemente in Kunststoff ausgeführt sind, wobei die Elastizität der Ringnut genutzt wird, um im Zusammenspiel mit dem Montageabsatz eine Dichtwirkung zu erzielen.

Die Fixierung der Wandungselemente kann durch unterschiedliche Montagemittel erfolgen. So sind z. B. Klipsverbindungen denkbar, wobei an einem Wandungselement die Rastnasen und am anderen die korrespondierenden Aussparungen vorgesehen werden müssen. Eine andere Möglichkeit ist die Verschraubung der einzelnen Wandungselemente. Zuletzt können diese auch miteinander verklebt oder verschweißt werden (durch z. B. das Laser-Durchstrahl-Schweißen), wobei durch dieses Montageverfahren gleichzeitig die vollständige Abdichtung gewährleistet wird.

Werden für die Wandungselemente Gleichteile vorgesehen, so müssen diese jeweils auf der einen Seite die Ringnut und auf der anderen Seite den Montageabsatz tragen. Auf diese Weise können die Wandungselemente ineinandergesteckt werden und ergeben dabei das gewünschte Gehäuse.

Die Ringnuten, sowie die Montageabsätze müssen miteinander korrespondieren. Dies bedeutet jedoch nicht, daß diese notwendigerweise kreisringförmig ausgebildet sein müssen. Eine kreisringförmige Anordnung ergibt jedoch den Vorteil, daß die Wandungselemente in beliebigen Winkel zueinander zusammengesteckt werden können. Dadurch kann auch frei bestimmt werden, welche Winkellage die Rohrabzweigungen zueinander besitzen sollen. Hierdurch ergibt sich eine weitere Möglichkeit, das Saugrohr an die bestehenden geometrischen Verhältnisse der Brennkraftmaschine anzupassen. Bei einer Reihenanordnung der Zylinder ist z. B. eine gleichmäßige Anordnung der Rohrabzweigung ohne Winkelversatz vorteilhaft. Eine anderer sinnvolle Anordnung ist eine versetzte Anordnung der Wandungselemente um jeweils 180°. Bei genügendem Abstand der Zylinderbänke kann ein solches Saugrohr z . B. für eine Brennkraftmaschinen mit V-förmiger Zylinderanordnung venwandt werden.

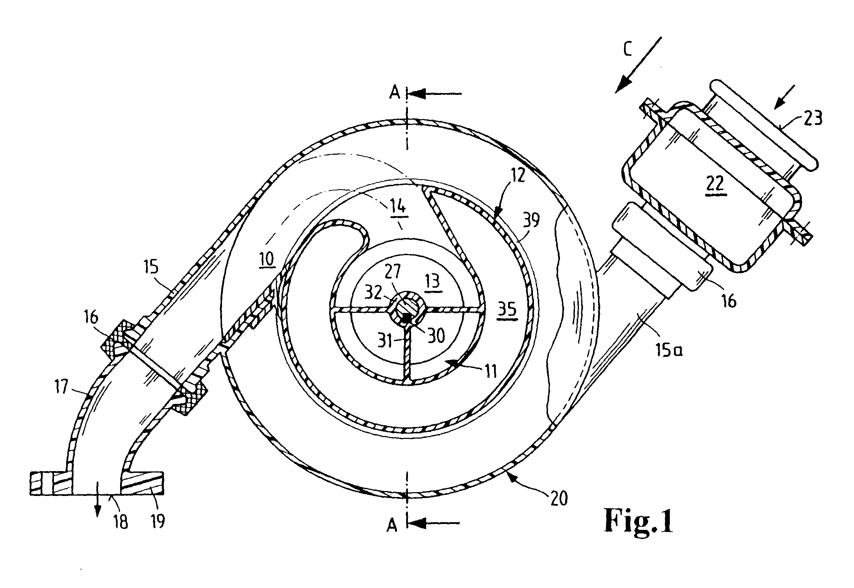

Eine weitere vorteilhafte Anwendung für die Wandungselemente ergibt sich, wenn im Saugrohr neben den Saugkanälen auch Resonanzkanäle gebildet werden sollen. Hierdurch läßt sich im Saugrohr eine Verstellung der Saugkanäle zur Nutzung des Effektes der Schwingrohraufladung sowie eine Verstellung von Resonanzkanälen zur Nutzung von Resonanzeffekten im Saugrohr verwirklichen. Ziel dieser Maßnahme ist eine Optimierung des Drehzahl-Drehmomentenverhaltens der Brennkraftmaschine. Eine mögliche konstruktive Ausgestaltung sowie das genaue Funktionsprinzip dieses Kombinationssaugrohres läßt sich der Deutschen Patentanmeldung mit dem Aktenzeichen 198 37 773.8 entnehmen (vergleiche insbesondere zum Funktionsprinzip Figur 9 und zum Aufbau Figur 1).

### Zeichnungen

Weitere Einzelheiten der Erfindung werden in den Zeichnungen anhand von schematischen Ausführungsbeispielen beschrieben. Hierbei zeigen
- Figur 1: den Querschnitt durch ein erfindungsgemäßes Saugrohr, wobei die Schnittebene in einer der Stellscheiben liegt (Schnittebene B-B gemäß Figur 2),
- Figur 2: den Schnitt A-A gemäß Figur 1 und
- Figur 3: die Aufsicht auf das Gehäuse des Saugrohres gemäß der Figuren 1 und 2.

### Beschreibung der Ausführungsbeispiele

In Figur 1 läßt sich der Weg der Ansaugluft, den diese durch das Saugrohr nimmt, am besten verfolgen. Das Saugrohr ist im Querschnitt durch einen der Saugkanäle 10 dargestellt, wobei ein Sammelraum 11 im inneren einer Schaitwalze 12 in seiner Grundausrichtung senkrecht zur Bildebene liegt. Die Verbrennungsluft gelangt durch einen Einlaß 23 und Rohrabzweigungen 15a in den Sammelraum 11 und passiert einen Durchgang 14 um in den Saugkanal 10 zu gelangen. Der Saugkanal mündet in eine Rohrabzweigung 15, welche über ein elastisches Entkopplungselement 16 mit einem Schwingrohrendstück 17 verbunden ist. Das Schwingrohrendstück 17 ist mit einem Auslaß 18 versehen, welcher über einen Zylinderkopfflansch 19 mit einer nicht dargestellten Brennkraftmaschine verbunden werden kann. Im Sammelraum 11 befindet sich weiterhin eine Resonanzöffnung 13, die zwei Sammelraumhälften miteinander verbindet und durch eine nicht dargestellte Kreisblende verschließbar ist.

Ein Gehäuse 20, in dem die Schaltwalze 12 untergebracht ist, weist weiterhin Resonanzkanäle 21 auf (vergleiche Figur 3), die in die Rohrabzweigungen 15a münden. Über ein weiteres elastisches Entkopplungselement 16 sind diese Rohrabzweigungen mit einem Resonanzraum 22 verbunden, in den der Einlaß 23 mündet. Durch diesen wird die Ansaugluft in das Saugrohr eingespeist und gelangt durch die in Figur 1 nicht dargestellten Resonanzkanäle 21 in den Sammetraum 11. Eine Verdrehung der Schaltwalze bewirkt somit eine Veränderung der Länge sowohl der Saugkanäle 10 als auch der Resonanzkanäle 21.

Im Längsschnitt des Saugrohrs gemäß Figur 2 wird dessen Aufbau deutlich. Das Gehäuse 20 besteht aus verschiedenen Wandungselementen. Diese lassen sich in gleichartige Mittelteile 24 und Endteile 25, von denen nur das rechte, mit einem Antrieb 26 versehene dargestellt ist, einteilen. Die Endteile 25 und Mittelteile 24 bilden die Saugkanäle 10 und die Resonanzkanäle 21, die einander abwechseln. Vergleicht man das in Figur 2 dargestellte Saugrohr mit dem aus Figur 3, so zeigt sich die Moglichkeit eines modularen Aufbaus der Saugrohre. Das Saugrohr gemaß Figur 3 ist fur eine Sechszylinder-Brennkraftmaschine vorgesehen, wobei jeweils zwei Resonanzkanäle 21 und drei Saugkanäle 10 zu einem Paket mit fünf Kanälen zusammengefaßt sind. Das Saugrohr gemäß Figur 2 ist für eine Vierzylinder-Brennkraftmaschine vorgesehen, so daß der äußerste Saugkanal 10 wegfällt und das Endteil 25 zur Bildung des ersten Resonanzkanals 21 verwendet wird. Mit dem Antrieb 26 ist eine Welle 27 verbunden, die durch eine Drehachse 28 der Schaltwalze 12 läuft. Die Schaltwalze besteht aus einzelnen Stellscheiben 29, die auf der Welle 27 ballig gelagert sind. Das Drehmoment wird von der Welle 27 auf die Stellscheiben 29 über eine Passfederverbindung 30 (vergleiche Figur 1) gewährleistet. Die Stellscheiben sind über Stützrippen 31 mit den balligen Lagerungen 32 verbunden. Die Stützrippen erlauben eine Durchleitung der Verbrennungsluft im Sammelraum.

Die Stellscheiben 29 sind zweiteilig aufgebaut. Sie bestehen aus einem Grundkörper 33 und einem Deckel 34, wobei diese beiden Teile einen Totraum 35 bilden (vergleiche auch Fig. 1). Dieser Totraum umläuft den Sammelraum ringförmig und gewährleistet einerseits, daß der Sammelraum 11 keinen zu großen Querschnitt erhält und andererseits, daß die schneckenförmig angeordneten Saugkanäle 10 aufgrund der geforderten Grenzen der Strömungsverluste keinen zu kleinen Radius beschreiben. Die Durchgänge 14 überbrücken den Totraum 35, um den Sammelraum 11 mit den Saugkanälen 10 bzw. den Resonanzkanälen 21 zu verbinden. Der Durchgang 14 ist vollständig im Grundkörper 33 abgebildet, um evtl. Undichtigkeiten zu vermeiden. Der Grundkörper kann durch einen entsprechenden Kernzug z. B. spritzgußtechnisch aus Kunststoff hergestellt werden. Auch die Endteile 25 und die Mittelteile 24 werden bevorzugt aus Kunststoff spritzgußtechnisch hergestellt.

Die Innenkrümmung des Saugkanäle 10 und Resonanzkanäle 21 wird durch die Außenwand 36 der einzelnen Stellscheiben 29, die zur Schaltwalze 12 gehören, gebildet. Die Seitenwände der Saugkanäle 10 und Resonanzkanäle 21 werden durch die Seitenwand des Endteils 25 bzw. Ringrippen 37, die Teil der Mittelteile 24 sind und nach radial innen in den zylindrischen Gehäuseraum ragen, gebildet. Zwischen den Stellscheiben 29 verbleiben Ringspalt 38, in die die Ringrippen 37 hineinragen.

Zur Abdichtung der Resonanzkanäle 21 bzw. Saugkanäle 10 untereinander bzw. zum Sammelraum 11 hin, sind an den Stellscheiben 29 Dichtlippen 39 angebracht, die sich axial im Ringspalt 38 ausdehnen und an der Radialrippe 37 anliegen. Die Dichtlippen können in Zweikomponententechnik an die Stellscheiben 29 angespritzt werden. Als Dichtungswerkstoffe kommen z. B. Elastomere in Frage, die an dem Werkstoff der Stellscheiben haften. Zur Verbindung der Mittelteile 24 untereinander bzw. deren Verbindung zu den Endteilen 25 sind an jedem Mittelteil jeweils eine Ringnut 40 und einen Montageabsatz 41 angebracht. Über diese Verbindung werden die einzelnen Wandungselemente zusammengesteckt. Die Fixierung kann z. B. nach der Montage durch Laserschweißen erfolgen. Alternativ, aber nicht dargestellt, wäre eine Klipsverbindung möglich. Die Montageabsätze 41 haben gegenüber der Ringnut 40 Übermaß, so das durch das Zusammenstecken gleichzeitig eine Dichtung des Saugrohrgehäuses erfolgt.

In Figur 3 ist die Ansicht C gemäß Figur 1 als Ansicht eines Saugrohrs mit 6 Saugkanälen 10 und vier Resonanzkanälen 21 dargestellt. Der Resonanzraum ist ohne Deckel dargestellt, wobei der Einlaß 23 gestrichelt angedeutet ist. Vom Resonanzraum führen Öffnungen 42 in die Rohrabzweigungen 15a, welche sich hinter dem Resonanzraum 22 befinden. Diese führen in die Resonanzkanäle 21, welche in den nicht zu sehenden Sammelraum führen. Von dort wird die Ansaugluft in die Saugkanäle 10 eingespeist von denen sie in die hinter dem Saugohrgehäuse befindlichen Rohrabzweigungen 15 eingeleitet wird. Der Antrieb 26a ist zwischen den beiden Blöcken, bestehend aus Saugkanälen 10 und Resonanzkanäten 21, angeordnet.

## Patentansprüche

1. Saugrohr, insbesondere für die Ansaugluft einer Brennkraftmaschine, enthaltend
- ein Gehäuse (20) mit einem Einlaß (23) und Auslässen (18),
- eine durch einen Antrieb (26, 26a) verstellbare Schaltwalze (12), in die ein Sammelraum (11) integriert ist und die mit Durchgängen (14) vom Sammelraum zu einzelnen Saugkanälen (10) versehen ist,
- schneckenförmig angeordneten Saugkanälen (10), die vom Sammelraum (11) zu den Auslässen (18) führen, wobei die Saugkanäle teilweise durch Wandungselemente (24, 25), deren Trennfugen senkrecht zur Drehachse (28) der Schaltwalze (12) angeordnet sind, und teilweise durch eine Außenwand (36) der Schaltwalze gebildet werden,
- wobei die Wandungselemente (24, 25) für die Saugkanäle (10) gleichzeitig zumindest teilweise das Gehäuse (20) bilden, wobei diese dazu dichtend miteinander verbunden sind
**dadurch gekennzeichnet, daß** zumindest ein Teil der Wandungselemente (24, 25) eine Ringrippe (37) aufweist, die den jeweils gebildeten Saugkanal (10) einseitig in axialer Richtung abschließt und daß der andere axiale Abschluß des Saugkanals durch eine Ringrippe (37) jeweils eines benachbarten Wandungselementes (24, 25) gebildet ist.

2. Saugrohr nach Anspruch 1, **dadurch gekennzeichnet, daß** die Schaltwalze (12) aus Stellscheiben (29) gebildet wird, die zusammen mit dem Antrieb (26, 26a) eine verstellbare Einheit bilden.

3. Saugrohr nach einem der vorherigen Ansprüche, **dadurch gekennzeichnet, daß** die Schaltwalze (12) in ihrer Drehachse (28) auf einer Welle (27) gelagert ist.

4. Saugrohr nach einem der Ansprüche 2 oder 3, **dadurch gekennzeichnet, daß** zwischen den Ringrippen und der jeweiligen Stellscheibe (29) Dichtmittel vorgesehen sind, die eine Drehung der Stellscheiben zulassen.

5. Saugrohr nach Anspruch 4, **dadurch gekennzeichnet, daß** die Dichtmittel aus Dichtlippen (39) bestehen, die in einem Ringspalt (38) zwischen Ringrippen (37 und den Stellscheiben (29) untergebracht sind.

6. Saugrohr nach einem der vorherigen Ansprüche, **dadurch gekennzeichnet, daß** das Gehäuse (20) zumindest teilweise aus identischen Wandungsetementen, insbesondere aus zwei Endteilen (25) und identischen Mittelteilen (24) aufgebaut ist.

7. Saugrohr nach einem der vorherigen Ansprüche, **dadurch gekennzeichnet, daß** mit den Auslässen (18) kommunizierende Rohrabzweigungen (15, 15a) vorgesehen sind wobei diese jeweils komplett in das zugehörige Wandungselement (24, 25) des Saugkanals integriert sind.

8. Saugrohr nach einem der vorherigen Ansprüche, **dadurch gekennzeichnet, daß** die Verbindung der Wandungselemente (24, 25) untereinander durch eine Ringnut (40) im einen und einen Montageabsatz (41) im anderen Wandungselement gewährleistet ist.

9. Saugrohr nach einem der vorherigen Ansprüche, **dadurch gekennzeichnet, daß** die Verbindung der Wandungselemente (24, 25) untereinander kreisringförmig ausgeführt ist.

10. Saugrohr nach einem der vorherigen Ansprüche, **dadurch gekennzeichnet, daß** durch die Wandungselemente (24. 25) neben Saugkanälen (10) auch Resonanzkanäle (21) gebildet sind,

## Claims

1. Intake pipe, particularly for the intake air of an internal combustion engine including :
- a housing with an inlet (23) and outlets (18),
- a shift drum (12) which can be regulated by a drive (26, 26a) in which said shift drum a collecting chamber is integrated and which is provided with passages (14) from the collecting chamber to the intake channels (10),
- arranged helical intake channels (10) which are conducted from the collecting chamber (11) to the outlets (18); whereby the intake sections are partly formed by wall elements (24, 25); the joints of these elements being arranged perpendicularly to the rotary axis (28) and whereby the said intake sections are partly formed by an exterior wall (36) of the shift drum.
- whereby the wall elements (24, 25) for the intake channels (10) are forming simultaneously at least the housing; whereby the said intake channels are sealingly connected to each other,
**characterised in that** at least one part of the wall elements (24, 25) presents an annular ridge (37) which closes the intake channel (10) realised respectively on one side in the axial direction and **in that** the other axial closure of the intake channel is formed by an annular ridge (37) of a respectively proximate wall element (24, 25).

2. Intake pipe according to claim 1, **characterised in that** the shift drum (12) is formed by washer disks (29) which are forming an adjustable unit together with the drive (26, 26a).

3. Intake pipe according to one of the claims 2 or 3, **characterised in that** the shift drum (12) is situated with its rotary axis (28) on an axle (27).

4. Intake pipe according to one of the claims 2 or 3, **characterised in that** sealing means are provided between the annular ridges and the according washer disks 29); said sealing means allowing a rotation of the washer disks.

5. Intake pipe according to the claim 5, **characterised in that** the sealing means are constituted by sealing lips (39) which are arranged in an annular slot (38) between the annular ridges (37) and the washer disks (29).

6. Intake pipe according to one of the preceding claims, **characterised in that** the housing (20) is at least partially constituted by identical wall elements, particularly by two end portions (25) and identical median portions (24).

7. Intake pipe according to one of the preceding claims, **characterised in that** junction pipes (15, 15a) communicating with the outlets (18) are provided ; whereby the said junctions are completely integrated respectively in the associated wall elements (24, 25) of the intake channels .

8. Intake pipe according to one of the preceding claims, **characterised in that** the connection of the wall elements (24, 25) is guaranteed by an annular groove (40), first, in one mounting step (41) and second, in the other wall element.

9. Intake pipe according to one of the preceding claims, **characterised in that** the connection of the wall elements (24, 25) to each other is realised in the form of an annulus .

10. Intake pipe according to one of the preceding claims, **characterised in that** the wall elements (24, 25) are also forming resonance channels (21) besides the intake channels (10).

## Revendications

1. Tubulure d'admission, notamment pour l'air aspiré d'une machine à combustion comprenant :
- un boîtier avec une entrée (23) et des sorties (18)
- un cylindre d'ouverture et de fermeture (12) réglable par un entraînement (26, 26a) dans lequel est intégrée une chambre collecteur (11) et qui est pourvu de passages (14) de la chambre collecteur vers les différents canaux d'aspiration (10).
- des canaux d'admission (10) disposés de façon hélicoïdale, lesquels canaux conduisent de la chambre collecteurs (11) vers les sorties (18) ; les canaux d'admission étant formés en partie par des éléments de paroi (24, 25) dont les joints sont disposés de manière perpendiculaire à l'axe de rotation (28) du cylindre d'ouverture et de fermeture (12) et formés en partie par une paroi extérieure (36) du cylindre d'ouverture et de fermeture.
- les éléments de paroi (24, 25) pour les canaux d'admission (10) formant en même temps, au moins partiellement, le boîtier ; lesquels canaux étant liés entre eux de façon étanche,
**caractérisé en ce qu'**au moins une partie des éléments de paroi (24, 25) présente une rainure annulaire (37) qui ferme le canal d'admission (10) réalisé à chaque fois d'un côté en direction axiale et **en ce que** l'autre fermeture axiale du canal d'admission est réalisée à chaque fois d'une rainure annulaire (37) d'un élément de paroi (24, 25) voisin.

2. Tubulure d'admission selon la revendication 1 **caractérisée en ce que** le cylindre d'ouverture et de fermeture (12) est formé de disques de réglage (29) qui forment ensembles avec l'entraînement (26, 26a) une unité réglable.

3. Tubulure d'admission selon une des revendications précédentes, **caractérisée en ce que** le cylindre d'ouverture et de fermeture (12) est disposé dans son axe de rotation (28) sur un arbre (27).

4. Tubulure d'admission selon une des revendications 2 ou 3 **caractérisée en ce qu'**entre les rainures annulaires et chaque disque de réglage (29) on a prévu des moyens d'étanchéité qui permettent une rotation des disques de réglage (29).

5. Tubulure d'admission selon la revendication 4, **caractérisée en ce que** les moyens d'étanchéité sont constitués de lèvres d'étanchéité (39) qui sont disposées dans une fente annulaire (38) entre les nervures annulaires (37) et les disques de réglage (29).

6. Tubulure d'admission selon une des revendications précédentes, **caractérisée en ce que** le boîtier (20) est formé au moins partiellement d'éléments de parois identiques, notamment de deux parties terminales (25) et de parties médianes identiques (24)

7. Tubulure d'admission selon une des revendications précédentes, **caractérisée en ce que** des raccordements de tube (15, 15a) communicants sont prévues avec les sorties (18) ; lesquels raccordements sont intégrés à chaque fois complètement dans l'élément de paroi (24, 25) associé du canal d'admission.

8. Tubulure d'admission selon une des revendications précédentes, **caractérisée en ce que** la liaison mutuelle des éléments de parois (24, 25) est effectuée par une rainure annulaire (40) dans un et un gradin de montage (41) dans l'autre élément de paroi.

9. Tubulure d'admission selon une des revendications précédentes, **caractérisée en ce que** la liaison mutuelle des éléments de paroi (24, 25) est réalisée en anneau circulaire.

10. Tubulure d'admission selon une des revendications précédentes **caractérisée en ce que** des canaux de résonance (21) sont aussi formés par les éléments de paroi (24, 25) à côté des canaux d'admission (10).
